# EUROPÄISCHE PATENTSCHRIFT

(11) **EP 3 195 698 B1**
(45) Veröffentlichungstag und Bekanntmachung des Hinweises auf die Patenterteilung: **26.10.2022**
(21) Anmeldenummer: 14772068.4
(22) Anmeldetag: 17.09.2014
(51) Int. Cl.: H02J 9/06, H05B 47/10, H05B 45/39

(54) **ELEKTRONISCHES VORSCHALTGERÄT UND VERFAHREN ZUR ANSTEUERUNG EINER LAST**
ELECTRONIC BALLAST AND METHOD FOR CONTROLLING A LOAD
BALLAST ÉLECTRONIQUE ET PROCÉDÉ DE COMMANDE D'UNE CHARGE

(43) Veröffentlichungstag der Anmeldung: 26.07.2017
(73) Patentinhaber: Eaton Intelligent Power Limited, Dublin 4, D04 Y0C2 (IE)
(72) Erfinder: FRÜCHT, Johannes, 59494 Soest-Ampen (DE)
(74) Vertreter: Novagraaf Group
(86) Internationale Anmeldenummer: PCT/EP2014/002522
(87) Internationale Veröffentlichungsnummer: WO 2016/041567

(56) Entgegenhaltungen:
- EP-A1- 0 490 330
- AU-A1- 2013 221 964
- JP-A- 2010 009 858
- JP-A- 2012 029 374

## Beschreibung

Die Erfindung betrifft ein elektronisches Vorschaltgerät gemäß dem Oberbegriff von Anspruch 1 sowie ein Verfahren zum Ansteuern einer Last gemäß Anspruch 15.

Ein elektronisches Vorschaltgerät wird zur Ansteuerung wenigstens einer Last, insbesondere Lampe, wie LED, Leuchtstofflampe, Gasentladungslampe oder dergleichen verwendet.

Vorschaltgeräte sind aus der JP 2010 009858 A, der JP 2012 029374 A, der EP 0 490 330 A1 und der AU 2013 221 964 A1 bekannt.

Ein solches Vorschaltgerät dient dazu, gegebenenfalls sowohl eine Start- oder Zündspannung und anschließend auch eine Betriebsspannung zum Betrieb der entsprechenden Lampe beziehungsweise Last bereitzustellen. Zum Zünden einer solchen Lampe ist nach dem Einschalten in der Regel eine hohe Spannung erforderlich, siehe Start- oder Zündspannung. Anschließend erfolgt ein Betreiben der entsprechenden Lampe mit der Betriebsspannung. Gleichzeitig besteht die Notwendigkeit, entsprechende Lampen durch das elektronische Vorschaltgerät mit höheren Frequenzen zu betreiben, wobei solche Frequenzen typischerweise 20 kHz und mehr betragen. Durch ein entsprechendes elektronisches Vorschaltgerät ist mindestens eine Lampe und gegebenenfalls sind auch zwei oder mehr Lampen versorgbar. Über das elektronische Vorschaltgerät kann ebenfalls ein Dimmen der entsprechenden Lampe erfolgen oder es können weitere Sicherheitsmaßnahmen, wie Überspannungsabschaltung, Unterspannungsabschaltung, Abschaltung beim End-Of-Life-Phänomen und dergleichen durchgeführt werden.

Ein solches elektronisches Vorschaltgerät kann als separates Bauelement einer entsprechenden Lampe zugeordnet sein oder auch in dieser eingebaut werden. Bekannte elektronische Vorschaltgeräte weisen in der Regel einen Netzgleichrichter, einen Zwischenschaltkreis zur Bereitstellung einer Zwischenkreisspannung, einen Steuerbaustein in Form einer integrierten Schaltung und insbesondere einen Resonanzwandler auf. Im Leerlauf wird eine entsprechend hohe Spannung generiert, um eine Leuchtstofflampe zu starten. Wird eine andere Last, z.B. eine LED, angeschlossen, wird ein Resonanzkreis gedämpft, sodass keine erhöhte Spannung generiert wird.

Bei einigen Einsatzgebieten einer Lampe soll diese sowohl durch Netzspannung als auch bei Ausfall der Netzspannungsversorgung durch eine Notfallspannung versorgbar sein. D. h., es muss ein Umschalten auf die Notfallspannungsversorgung möglich sein. Dies erfolgt bisher über einen separaten Notlichtwandler, der im Notlichtfall als eigenes Bauteil die entsprechende Lampe versorgt, wobei als Notlichtspannung beispielsweise eine Batteriespannung oder Akkumulatorspannung einsetzbar ist. Der Erfindung liegt die Aufgabe zugrunde, ein elektronisches Vorschaltgerät der eingangs genannten Art dahingehend zu verbessern, dass im Notlichtfall ohne zusätzlichen separaten Notlichtwandler eine entsprechende Versorgung der Last über das elektronische Vorschaltgerät in sicherer und gegebenenfalls auch anpassbarer Weise erfolgt.

Diese Aufgabe wird durch ein elektronisches Vorschaltgerät mit den Merkmalen des Kennzeichens des Patentanspruchs 1 gelöst, sowie durch ein Verfahren gemäß Anspruch 15.

Verfahrensmäßig zeichnet sich die Erfindung dadurch aus, dass mittels des elektronischen Vorschaltgeräts einerseits bei Netzspannungsversorgung die Netzspannung über einen Netzgleichrichter gleichgerichtet wird und über einen Resonanzwandler eine Start- oder Betriebsspannung erzeugt wird, und andererseits im Notlichtfall ein elektronisches Schaltelement des EVGs die Netzspannungsversorgung abschaltet und eine Notfallspannung und/oder Arbeitsfrequenz des EVGs mittels Zwischenkreisspannungsschaltung und Arbeitsfrequenzschaltung eingestellt werden.

Vorrichtungsgemäß erfolgt die Lösung der Aufgabe insbesondere durch ein elektronisches Schaltelement als Teil einer elektronischen Schalteinrichtung des EVGs zum Abschalten der Netzspannungsversorgung im Notlichtfall, wobei als Ersatz eine entsprechende Notfallspannung in das EVG einspeisbar ist und durch Zwischenkreisspannungsschaltung und Arbeitsfrequenzschaltung unterschiedliche Spannung im Notlichtfall bestimmbar und/oder Arbeitsfrequenzen des EVGs einstellbar sind. D. h., sowohl bei Netzspannungsversorgung als auch im Notlichtfall wird beispielsweise der gleiche Resonanzwandler des EVGs verwendet, wobei Zwischenkreisspannungsschaltung und Arbeitsfrequenzschaltung je nach Versorgungsfall eingesetzt werden und insbesondere im Notlichtfall über ein elektronisches Schaltelement die Netzspannungsversorgung abgeschaltet wird.

D. h., es ist kein separater Notlichtwandler mit beispielsweise eigenem Resonanzwandler, eigenem Reihenschwingkreis oder dergleichen notwendig. Stattdessen erfolgt nur eine separate Einspeisung der Notfallspannung und ansonsten werden die entsprechenden Teile des elektronischen Vorschaltgerätes verwendet, die auch bei Netzspannungsversorgung zum Einsatz kommen. Es erfolgt ein Abschalten der Netzspannungsversorgung im Falle eines Notlichtfalls. Im Notlichtfall kann die Zwischenkreisspannung durch die Zwischenkreisspannungsschaltung beeinflusst werden und die Arbeitsfrequenz kann durch die Arbeitsfrequenzschaltung beeinflusst werden. In diesem Zusammenhang ist außerdem zu beachten, dass durch die Arbeitsfrequenzschaltung ebenfalls eine Einstellung der Arbeitsfrequenz bei Netzspannungsversorgung und ebenso im Notlichtfall erfolgen kann. Das heißt, auch bei unterschiedlichen Netzspannungsleveln kann eine entsprechende Arbeitsfrequenzanpassung erfolgen, die ebenfalls im Notlichtfall durchgeführt wird.

Die Schalteinrichtung weist weiterhin einen entsprechenden elektronischen Schalter auf, durch den im Notlichtfall die Netzspannungsversorgung weggeschaltet wird, wenn die entsprechende Netzspannung zu gering ist. Fehlt ein solches Wegschalten der Netzspannungsversorgung, könnte es im Notlichtfall zu einer Überspannungsabschaltung kommen.

Die Zwischenkreisspannungsschaltung und die Arbeitsfrequenzschaltung sind aus verschiedenen umschaltbaren Widerstandskombinationen gebildet.

Die elektronische Schalteinrichtung zum Abschalten der Netzspannungsversorgung ist in Reihe zwischen Netzgleichrichter und Resonanzwandler verschaltet. Die elektronische Schalteinrichtung umfasst zumindest ein elektronisches Netzschaltelement, welches insbesondere als Transistor, vorzugsweise Feldeffekttransistor ausgebildet sein kann. Ist die Netzspannungsversorgung durch dieses Schaltelement ausgeschaltet, kann die Notfallspannungsversorgung entsprechend zugeschaltet werden.

Als Netzspannungsversorgung dient in der Regel die übliche Netzwechselspannung. Diese wird durch den Netzgleichrichter in Form eines Brückengleichrichters gleichgerichtet und über eine Netzfiltereinrichtung (Diode) ist der Netzgleichrichter mit dem EVG-Teil verbunden.

Eine einfache Ausführungsform einer solchen Netzfiltereinrichtung weist zumindest eine Diode.

Die gleichgerichtete Netzspannung wird über eine Diode dem EVG-Teil zugeführt. Ein Boost-Transistor kann von einem Steuerbaustein angesteuert werden und kann in Zusammenhang mit einer Boost-Drossel und einer Boost-Diode eine erhöhte Zwischenkreis-spannung für den Resonanzkreiswandler generieren, die im Kondensator gespeichert wird. Die Höhe der Zwischenspannung wird durch einen Spannungsteiler bestimmt. Eine solche Zwischenkreisspannung wird durch den Spannungsteiler beispielsweise bei Netzbetrieb auf 420 V eingeregelt. Andere Spannungswerte sind selbstverständlich möglich, wobei die entsprechenden Spannungswerte von der Art des Resonanzwandlers, von der Art und Anzahl der Lampen und dergleichen abhängt. Im einfachsten Fall weist diese erste Widerstandskombination zwei Widerstände auf.

In der Regel erfolgt ebenfalls eine Einstellung einer Arbeitsfrequenz des EVGs, wobei dies durch einen Frequenzeinstellwiderstand als Teil der Arbeitsfrequenzschaltung erfolgen kann, der vom Steuerbaustein zur Masse des Resonanzwandlers verschaltet ist.

In diesem Zusammenhang ist es ebenfalls denkbar, dass nicht nur ein Frequenzeinstellwiderstand, sondern auch mehrere in Reihe geschaltete Frequenzeinstellwiderstände eingesetzt werden.

Um eine entsprechende Einspeisung der Notfallspannung in das EVG in einfacher Weise zu ermöglichen, kann entsprechend zu dem Netzspannungsgleichrichter ein separater Notfallspannungsgleichrichter als Teil des EVGs vorgesehen sein. Über diesen Notfallspannungsgleichrichter erfolgt dann eine Einspeisung der Notfallspannung.

Die entsprechende Notfallspannung wird an dem Notfallspannungsgleichrichter über einen Gegentaktwandler im Notlichtfall aus entsprechend einer Batteriespannung oder Akkumulatorspannung bereitgestellt.

Dieser Gegentaktwandler ist entsprechend mit dem Notfallspannungsgleichrichter verschaltbar.

Die Zufuhr der Notfallspannung kann in diesem Zusammenhang über den Notfallspannungsgleichrichter und eine zugehörige Diodeneinrichtung zum EVG-Teil erfolgen.

Um im Notlichtfall ein einfaches Umschalten auf die Notfallspannung und entsprechende Variationen von Spannung und Frequenz zu ermöglichen, kann das elektronische Vorschaltgerät zumindest eine Parallelschaltung aus elektronischem Notfallschalter/- schaltelement und Notfallwiderstand aufweisen, wobei im Notlichtfall der elektronische Notfallschalter ausschaltbar und der Notfallwiderstand zusammen mit insbesondere der ersten Widerstandskombination eine zweite Widerstandskombination zur Bestimmung einer zweiten Zwischenkreisspannung bildet. D. h., der entsprechende Notfallwiderstand kann separat zur ersten Widerstandskombination zugeschaltet werden, sodass sich dadurch eine zweite Widerstandskombination ergibt, die einen weiteren Spannungsteiler bildet, der zur Bestimmung der zweiten Zwischenkreisspannung dient. Dabei bilden Notfallschlatelement, Nofallwiderstand u nd erste Widerstandskombination die Zwischenkreisspannungsschaltung.

Analog kann das elektronische Vorschaltgerät eine Reihenschaltung aus zumindest einem weiteren elektronischen Schaltelement und einem weiteren Widerstand parallel zum Frequenzeinstellwiderstand aufweisen. Dadurch kann der Frequenzeinstellwiderstand, der beispielsweise bei Netzspannungsversorgung die entsprechende Arbeitsfrequenz bestimmt, durch den weiteren Widerstand ersetzt werden, der in diesem Fall eine andere Arbeitsfrequenz des EVGs bestimmt. Dabei bilden Schaltelement, weiterer Widerstand und Frequenzeinstellwiderstand als weitere umschaltbare Widerstandskombination die Arbeitsfrequenzschaltung.

Wie bereits ausgeführt, kann der EVG-Teil neben Steuerbauteil und Ladekondensator wenigstens zwei Transistoren und einen Reihenschwingkreis aufweisen, die beispielsweise zwischen Steuerbaustein und Last angeordnet sind und zum entsprechenden Betreiben der Last dienen.

Entsprechende Schutzeinrichtungen des Steuerbausteins können in vorteilhafter Weise nicht nur bei Netzspannungsversorgung, sondern auch bei Notspannungsversorgung verwendet werden, wie beispielsweise Schutzeinrichtungen zur Überspannungsabschaltung, zur Unterspannungsabschaltung, oder zur Abschaltung bei dem sogenannten End-Of-Life-Phänomen.

Im Folgenden wird ein vorteilhaftes Ausführungsbeispiel der Erfindung anhand der in der Zeichnung beigefügten Figur näher erläutert.

Es zeigt:

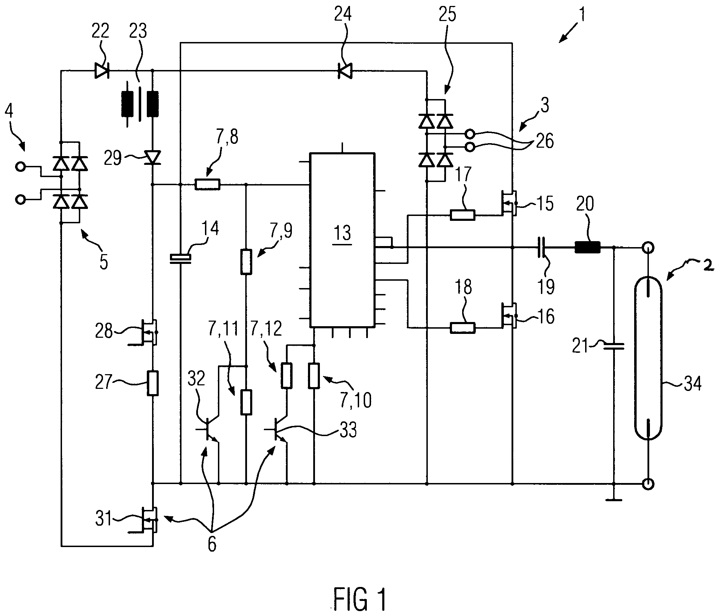

- Figur 1:: eine prinzipielle Schaltung eines erfindungsgemäßen Vorschaltgerätes zum Betrieb bei Netzspannungsversorgung und Notfallspannungsversorgung.

Das erfindungsgemäße Vorschaltgerät 1 ist bei dem dargestellten Ausführungsbeispiel zur Ansteuerung einer Last 2 ausgebildet, die eine Lampe, insbesondere eine LED, Leuchtstofflampe oder Gasentladungslampe oder dergleichen ist. Die Last 2 ist mittels eines Resonanzwandlers 3 mit einer Netzspannungsversorgung 4 verbunden. Zusätzlich zum Resonanzwandler 3 weist das elektronische Vorschaltgerät 1 einen Netzgleichrichter 5 und einen Gleichspannungszwischenkreis aus Diode 22 und Boost-Drossel 23 sowie weiterer Diode (Boost-Diode) 29 auf. Mittels des Netzgleichrichters 5 erfolgt eine Gleichrichtung der entsprechenden Netzspannung, die auf eine erhöhte Zwischenkreisspannung transferiert wird und geglättet am Ladekondensator 14 anliegt. Die entsprechende Zwischenkreisspannung wird durch einen aus einer ersten Widerstandskombination 7 mit Widerständen 8 und 9 gebildeten Spannungsteiler bestimmt. Beispielsweise kann ein entsprechender Spannungswert 420 V betragen. Dieser Wert ist allerdings nur beispielhaft angegeben, wobei auch andere Spannungswerte je nach verwendetem elektronischem Vorschaltgerät, angeschlossener Art und Anzahl der Lampen und dergleichen vorliegen können.

Im Fall der Netzspannungsversorgung 4 sind bei dem dargestellten Ausführungsbeispiel ein erstes elektronisches Netzschaltelement 31 und ein weiteres elektronisches Notfallschaltelement 32 eingeschaltet, sodass ein parallel zu diesem elektronischen Notfallschaltelement verschalteter Notfallwiderstand 11 überbrückt ist. Eine entsprechende Arbeitsfrequenz des Vorschaltgerätes 1, siehe hierzu auch Steuerbaustein 13, wird mittels eines Frequenzeinstellwiderstandes 10 bestimmt. Parallel zu diesem Frequenzeinstellwiderstand 10 ist ein weiteres elektronisches Schaltelement 33 in Reihenschaltung mit einem weiteren Widerstand 12 verschaltet.

Elektronisches Netzschaltelement 31, Widerstände 8, 9 und Notfallwidestand 11 bilden eine Zwischenkreisspannungsschaltung und Schaltelement 33, Frequenzeinstellwiderstand 10 und Widerstand 12 eine Arbeitsfrequenzschaltung.

Im Notlichtfall wird die Netzspannung der Netzspannungsversorgung 4 durch das Netzschaltelement 31 abgeschaltet. Über einen nicht dargestellten Gegentaktwandler wir eine entsprechende Notfallspannung Notspannungsanschlüssen 26 eines Notfallspannungsgleichrichters 25 zugeführt. Dieser ist ebenfalls Teil des elektronischen Vorschaltgerätes 1. Die entsprechende Notfallspannung wird über den Notfallspannungsgleichrichter 25 und eine mit diesem in Reihe verschaltete zweite Diode 24 eingespeist.

Erst wird Netzschaltelement 31 und etwas später Notlichtschaltelement 32 ausgeschaltet, um den Start mit erhöhter Zwischenkreisspannung durchzuführen. Dadurch werden eine neue Widerstandskombination und ein neuer Spannungsteiler bestimmt, siehe den Spannungsteiler aus Widerstand 8 einerseits und den Widerständen 9 und 11 andererseits. Durch diese neue Widerstandskombination ergibt sich eine neue Zwischenkreisspannung am Ladekondensator 14. Diese neue Zwischenkreisspannung kann beispielsweise 200 V, 350 V oder auch einen anderen Spannungswert annehmen, der jeweils abhängig von der Last bestimmt ist. Widerstand 11 kann aus einem oder mehreren Widerständen bestehen.

In der Regel kann die entsprechende Zwischenkreisspannung nicht beliebig verringert werden. Um im Notlichtfall eine weitere Verringerung der Lampenleistung zu ermöglichen, kann die Arbeitsfrequenz des elektronischen Vorschaltgerätes erhöht werden.

Dies erfolgt durch Einschalten des elektronischen Schaltelements 33, wodurch der Widerstand 12 parallel zum bisherigen Frequenzeinstellwiderstand 10 geschaltet wird. Dadurch wird der Widerstandswert durch die neue Widerstandskombination aus parallel geschalteten Widerständen 10 und 12 verringert und das elektronische Vorschaltgerät wird mit einer höheren Frequenz betrieben. Durch diese höhere Frequenz ergibt sich eine weitere Verringerung des Lichtstroms. Widerstand 12 kann aus einem oder mehreren Widerständen bestehen.

Erfindungsgemäß können mit dem entsprechenden elektronischen Vorschaltgerät in der in Figur 1 dargestellten Schaltung beispielsweise für 1,5 Stunden Notlichtbetrieb mit leicht reduziertem Lichtstrom und für 3 Stunden Notlichtbetrieb mit einem deutlich reduzierten Lichtstrom aus der gleichen Batterie über Gegentaktwandler und Notfallspannungsgleichrichter 25 aufrechterhalten werden.

Die übrigen Widerstände 17, 18, elektronische Schaltelemente 15, 16 sowie Kondensatoren 19, 21 und Induktivität 20 dienen zur direkten Ansteuerung der entsprechenden Last von Seiten des Steuerbausteins 13 her. In diesem Zusammenhang sei allerdings nochmals darauf hingewiesen, dass diese entsprechende Versorgung der Last 2 als Lampe 34 von Seiten des Steuerbausteins 13 her nur beispielhaft dargestellt ist. Wo tatsächlich die Last 2 am Steuerbaustein 13 angeschlossen ist, kann durch Belegung des Steuerbausteins geändert werden, ebenso wie die tatsächliche Beschaltung der Lampe 34 über Widerstände 17, 18, elektronische Steuerelemente 15, 16 oder Kondensatoren 19 beziehungsweise 21 und Induktivität 20. Diese Beschaltung hängt beispielsweise auch von der Art und Anzahl der Lampen 34 ab.

Insgesamt ergibt sich gemäß vorliegender Erfindung, dass eine Last und insbesondere eine Lampe in Form einer LED, Leuchtstofflampe oder Gasentladungslampe über die gleiche Schaltung sowohl bei Netzspannungsversorgung als auch im Notlichtfall betrieben werden. Es ist kein separates Bauteil oder kein separater Notlichtwandler notwendig, das oder der gegebenenfalls durch einen mechanischen Schalter oder dergleichen im Notlichtfall zur Versorgung der entsprechenden Last zugeschaltet wird. Stattdessen können erfindungsgemäß alle bereits in dem Vorschaltgerät 1 vorhandenen Schutzvorrichtung auch im Notlichtfall verwendet werden, wie End-Of-Life-Abschaltung, Über-/Unterspannungsabschaltung und dergleichen.

Wie oben ausgeführt, wird außerdem der Lichtstrom im Notlichtfall reduziert, siehe die entsprechende Einstellung der Arbeitsfrequenz sowie die Verminderung der Zwischenkreisspannung, sodass im Notlichtfall nur eine geringe Temperaturentwicklung auftritt, da im Notlichtfall die entsprechende Leistung geringer als bei Netzspannungsversorgung ist.

Dies führt beispielsweise zu erhöhter Lebensdauer der elektronischen Bauteile.

Weiterhin können andere Einrichtungen des elektronischen Vorschaltgeräts bei beiden Versorgungsarten verwendet werden, wie beispielsweise EMV-Filter oder dergleichen.

## Patentansprüche

1. Elektronisches Vorschaltgerät (1), EVG, zur Ansteuerung wenigstens einer Lampe (2), wie LED, Leuchtstofflampe, Gasentladungslampe oder dergleichen, mit zumindest:
einem Netzgleichrichter (5), der mit einer Netzspannungsversorgung (4) verbindbar ist, die eine Netzversorgung bereitstellt,
einem Resonanzwandler (3) zur Erzeugung einer Start- und / oder
Betriebsspannung aus der durch den Netzgleichrichter (5) gleichgerichteten Netzspannungsversorgung (4),
**dadurch gekennzeichnet, dass** das EVG (1) ferner aufweist:
eine elektronische Schalteinrichtung (6), die wenigstens ein elektronisches Netzschaltelement (31) aufweist, wobei das elektronische Netzschaltelement (31) derart ausgestaltet ist, dass es im Notlichtfall bei einer zu geringen Netzspannung die Netzspannung der Netzspannungsversorgung (4) abschaltet, wobei eine Notfallspannung als Zwischenkreisspannung in das EVG (1) über die elektronische Schalteinrichtung (6) einspeisbar ist,
eine Zwischenkreisspannungsschaltung (7, 8, 9, 11, 32) und
eine Arbeitsfrequenzschaltung (35, 10, 12, 33),
wobei mittels der Zwischenkreisspannungsschaltung unterschiedliche Zwischenkreisspannungen bestimmbar und mittels der Arbeitsfrequenzschaltung unterschiedliche Arbeitsfrequenzen des EVG (1) einstellbar sind,
wobei die Zwischenkreisspannungsschaltung (7, 8, 9, 11, 32) durch ein Notlichtschaltelement (32) der elektronischen Schalteinrichtung (6) umschaltbare Widerstandskombinationen aufweist, um im Notlichtfall die Zwischenkreisspannung zu verringern und eine Verringerung der Lampenleistung zu ermöglichen,
und die Arbeitsfrequenzschaltung (10, 12, 33) durch ein Schaltelement (33) der elektronischen Schalteinrichtung (6) umschaltbare Widerstandskombinationen aufweist,
um im Notlichtfall eine Frequenz des elektronischen Vorschaltgeräts (1) zu erhöhen und eine weitere Verringerung der Lampenleistung zu ermöglichen.

2. Elektronisches Vorschaltgerät nach Anspruch 1, wobei das elektronische Netzschaltelement (31) in Reihe zwischen Netzgleichrichter (5) und Resonanzwandler (3) verschaltet ist und als Transistor, vorzugsweise Feldeffekttransistor ausgebildet ist.

3. Elektronisches Vorschaltgerät nach einem der vorangehenden Ansprüche, wobei der Netzgleichrichter (5) ein Brückengleichrichter ist und über eine Netzfiltereinrichtung (22, 23, 29) des EVG (1) mit dem Resonanzwandler (3) verbunden ist.

4. Elektronisches Vorschaltgerät nach Anspruch 3, wobei die Netzfiltereinrichtung (22, 23, 29) zumindest eine Diode (22) und eine Boost-Drossel (23) aufweist.

5. Elektronisches Vorschaltgerät nach einem der vorangehenden Ansprüche, wobei eine erste Widerstandskombination der Zwischenkreisspannungsschaltung bei Netzspannungsversorgung (4) einen Spannungsteiler (8, 9) bildet und eine an einem Ladekondensator (14) des Resonanzwandlers (3) anliegende Zwischenkreisspannung bestimmt.

6. Elektronisches Vorschaltgerät nach Anspruch 5, wobei die erste Widerstandskombination zumindest zwei Widerstände (8, 9) aufweist.

7. Elektronisches Vorschaltgerät nach einem der vorangehenden Ansprüche, wobei ein Frequenzeinstellwiderstand (10) als Teil der Arbeitsfrequenzschaltung in Reihe von einem Steuerbaustein (13) des EVG (1) zur Masse des Resonanzwandlers (3) verschaltet ist.

8. Elektronisches Vorschaltgerät nach einem der vorangehenden Ansprüche, wobei das EVG (1) einen Notfallspannungsgleichrichter (25) zur Einspeisung der Notfallspannung aufweist.

9. Elektronisches Vorschaltgerät nach Anspruch 8, wobei die Notfallspannung über den Notfallspannungsgleichrichter (25) und eine Diodeneinrichtung (24) des EVG (1) dem Resonanzwandler (3) zuführbar ist.

10. Elektronisches Vorschaltgerät nach Anspruch 6, wobei die Zwischenkreisspannungsschaltung zumindest eine Parallelschaltung aus dem elektronischen Notfallschaltelement (32) und einem Notfallwiderstand (11) aufweist und im Notfall das elektronische Notfallschaltelement (32) ausschaltbar ist und der Notfallwiderstand (11) zusammen mit der ersten Widerstandskombination (8, 9) eine zweite Widerstandskombination zur Bestimmung einer zweiten Zwischenkreisspannung bildet, wobei das Notfallschaltelement (32), der Notfallwiderstand (11) und die erste Widerstandskombination (8, 9) die Zwischenkreisspannungsschaltung bilden.

11. Elektronisches Vorschaltgerät nach Anspruch 7, wobei das EVG (1) eine Reihenschaltung aus zumindest dem elektronischen Schaltelement (33) und einem Widerstand (12) parallel zum Frequenzeinstellwiderstand (10) aufweist, wobei das Schaltelement (33), der Widerstand (12) und der Frequenzeinstellwiderstand (10) als weitere umschaltbare Widerstandskombination die Arbeitsfrequenzschaltung bilden.

12. Elektronisches Vorschaltgerät nach Anspruch 7, wobei der Resonanzwandler (3) neben dem Steuerbaustein (13) des EVG (1) und dem Ladekondensator (14) des EVG (1) wenigstens zwei Transistoren (15, 16) und einen Reihenschwingkreis (19, 20, 21) aufweist.

13. Elektronisches Vorschaltgerät nach Anspruch 12, wobei der Steuerbaustein (13) Schutzeinrichtungen zur Über-/Unterspannungsabschaltung und/oder zur End-Of-Life-Abschaltung aufweist.

14. Elektronisches Vorschaltgerät nach Anspruch 10 oder 11, wobei der Notfallwiderstand (11) und/oder der Widerstand (12) aus einem oder mehreren Widerständen gebildet sind.

15. Verfahren zur Ansteuerung wenigstens einer Lampe (2), wie LED Leuchtstofflampe, Gasentladungslampe oder dergleichen, mittels eines elektronischen Vorschaltgeräts (1) umfassend:
Gleichrichten, durch einen Netzgleichrichter (5) des EVG (1), einer Netzspannungsversorgung (4), die eine Netzversorgung bereitstellt,
Erzeugen, durch einen Resonanzwandler (3) des EVG (1), einer Start- und/oder Betriebsspannung aus der durch den Netzgleichrichter (5) gleichgerichteten Netzspannungsversorgung (4),
**gekennzeichnet durch**:
Abschalten der Netzspannung der Netzspannungsversorgung (4) und Zuschalten einer Notfallspannung als Zwischenkreisspannung in das EVG (1) über ein elektronisches Netzschaltelement (31) einer elektronischen Schalteinrichtung (6) des EVG (1) im Notlichtfall bei einer zu geringen Netzspannung, Einstellen, durch eine Zwischenkreisspannungsschaltung (7, 8, 9, 11, 32) des EVG (1), die durch ein Notlichtschaltelement (32) der elektronischen Schalteinrichtung (6) umschaltbare Widerstandskombinationen aufweist,
unterschiedlicher Zwischenkreisspannungen, um im Notlichtfall die Zwischenkreisspannung zu verringern und eine Verringerung der Lampenleistung zu ermöglichen, Einstellen, durch eine Arbeitsfrequenzschaltung (10, 12, 33) des EVG (1), die durch ein Schaltelement (33) der elektronischen Schalteinrichtung (6) umschaltbare Widerstandskombinationen aufweist, unterschiedlicher Arbeitsfrequenzen des EVG (1), um im Notlichtfall eine Frequenz des elektronischen Vorschaltgeräts (1) zu erhöhen und eine weitere Verringerung der Lampenleistung zu ermöglichen.

## Claims

1. Electronic ballast (1), EVG, for controlling at least one lamp (2), such as an LED, fluorescent lamp, gas discharge lamp, or the like, with at least:
a mains rectifier (5) which can be connected to a mains voltage supply (4) which provides a mains supply,
a resonance converter (3) for generating a start and/or operating voltage from the mains voltage supply (4) rectified by the mains rectifier (5),
**characterized in that** the EVG (1) further includes:
an electronic switching device (6) which has at least one electronic mains switching element (31), wherein the electronic mains switching element (31) is designed such that it switches off the mains voltage of the mains voltage supply (4) in the event of an emergency light situation when the mains voltage is too low, wherein an emergency voltage as the intermediate circuit voltage can be fed into the EVG (1) via the electronic switching device (6),
an intermediate circuit voltage switch (7, 8, 9, 11, 32), and
a working frequency switch (35, 10, 12, 33),
wherein different intermediate circuit voltages can be determined by means of the intermediate circuit voltage switch, and different working frequencies of the EVG (1) can be set by means of the working frequency switch,
wherein the intermediate circuit voltage switch (7, 8, 9, 11, 32) has resistance combinations switchable by means of an emergency light switching element (32) of the electronic switching device (6) in order to reduce the intermediate circuit voltage in an emergency light situation, and to enable a reduction of the lamp power,
and the working frequency switch (10, 12, 33) has resistance combinations switchable by means of a switching element (33) of the electronic switching device (6) in order to increase a frequency of the electronic ballast (1) in an emergency light situation, and to enable a further reduction of the lamp power.

2. Electronic ballast according to claim 1, wherein the electronic mains switching element (31) is connected in series between the mains rectifier (5) and the resonance converter (3) and is designed as a transistor - preferably a field effect transistor.

3. Electronic ballast according to one of the preceding claims, wherein the mains rectifier (5) is a bridge rectifier and is connected to the resonance converter (3) via a mains filter device (22, 23, 29) of the EVG (1).

4. Electronic ballast according to claim 3, wherein the network filter device (22, 23, 29) has at least one diode (22) and a boost choke (23).

5. Electronic ballast according to one of the preceding claims, wherein, given a mains voltage supply (4), a first resistor combination of the intermediate circuit voltage switch forms a voltage divider (8, 9) and determines an intermediate circuit voltage applied to a charging capacitor (14) of the resonance converter (3).

6. Electronic ballast according to claim 5, wherein the first resistor combination has at least two resistors (8, 9).

7. Electronic ballast according to one of the preceding claims, wherein a frequency setting resistor (10), as part of the working frequency circuit, is connected in series by a control module (13) of the EVG (1) to the ground of the resonance converter (3).

8. Electronic ballast according to one of the preceding claims, wherein the EVG (1) has an emergency voltage rectifier (25) for feeding the emergency voltage.

9. Electronic ballast according to claim 8, wherein the emergency voltage can be supplied to the resonance converter (3) via the emergency voltage rectifier (25) and a diode device (24) of the EVG (1).

10. Electronic ballast according to claim 6, wherein the intermediate circuit voltage switch has at least one parallel switch consisting of the electronic emergency switching element (32) and an emergency resistor (11), and, in an emergency, the electronic emergency switching element (32) can be switched off, and the emergency resistor (11), together with the first resistor combination (8, 9), forms a second resistor combination for determining a second intermediate circuit voltage, wherein the emergency switching element (32), the emergency resistor (11), and the first resistor combination (8, 9) form the intermediate circuit voltage switch.

11. Electronic ballast according to claim 7, wherein the EVG (1) has a series switch consisting of at least the electronic switching element (33) and a resistor (12) parallel to the frequency setting resistor (10), wherein the switching element (33), the resistor (12), and the frequency setting resistor (10) form the working frequency switch as a further switchable resistor combination.

12. Electronic ballast according to claim 7, wherein the resonance converter (3) has, in addition to the control module (13) of the EVG (1) and the charging capacitor (14) of the EVG (1), at least two transistors (15, 16) and one series resonant circuit (19, 20, 21).

13. Electronic ballast according to claim 12, wherein the control module (13) has protective devices for an over/undervoltage shutdown and/or for an end-of-life shutdown.

14. Electronic ballast according to claim 10 or 11, wherein the emergency resistor (11) and/or the resistor (12) are formed from one or more resistors.

15. Method for controlling at least one lamp (2), such as an LED fluorescent lamp, gas discharge lamp, or the like, by means of an electronic ballast (1), comprising:
rectifying, by a mains rectifier (5) of the EVG (1), a mains voltage supply (4) which provides a mains supply,
generating, by means of a resonance converter (3) of the EVG (1), a start and/or operating voltage from the mains voltage supply (4) rectified by the mains rectifier (5),
**characterized by**
switching off the mains voltage of the mains voltage supply (4) and connecting an emergency voltage as an intermediate circuit voltage to the EVG (1) via an electronic mains switching element (31) of an electronic switching device (6) of the EVG (1) in an emergency light situation when there is an excessively low mains voltage,
setting, by means of an intermediate circuit voltage switch (7, 8, 9, 11, 32) of the EVG (1), which has resistor combinations switchable by means of an emergency light switching element (32) of the electronic switching device (6), different intermediate circuit voltages, in order to reduce the intermediate circuit voltage in an emergency light situation, and to enable a reduction of the lamp power,
setting, by means of a working frequency switch (10, 12, 33) of the EVG (1), which has resistor combinations switchable by means of a switching element (33) of the electronic switching device (6), different operating frequencies of the EVG (1), in order to increase a frequency of the electronic ballast (1) in an emergency light situation, and to enable a further reduction of the lamp power.

## Revendications

1. Ballast électronique (1), EVG, pour la commande d'au moins une lampe (2), telle qu'une DEL, une lampe fluorescente, une lampe à décharge de gaz ou similaire, comprenant au moins :
un redresseur de secteur (5), lequel peut être connecté à une alimentation de tension secteur (4), laquelle fournit une alimentation réseau,
un convertisseur résonant (3) pour la génération d'une tension de démarrage et/ou de fonctionnement à partir de l'alimentation de tension secteur (4) redressée par le redresseur de secteur (5),
**caractérisé en ce que** l'EVG (1) présente en outre :
un dispositif de commutation électronique (6), qui présente au moins un élément de commutation de réseau électronique (31), l'élément de commutation de réseau électronique (31) étant conçu de telle façon qu'en cas d'éclairage de secours, lors d'une tension secteur trop faible, il coupe la tension secteur de l'alimentation de tension secteur (4), une tension de secours pouvant être alimentée en tant que tension de circuit intermédiaire dans l'EVG (1) à travers le dispositif de commutation électronique (6),
un circuit de tension de circuit intermédiaire (7, 8, 9, 11, 32) et
un circuit à fréquence de fonctionnement (35, 10, 12, 33),
différentes tensions de circuit intermédiaire pouvant être déterminées au moyen du circuit de tension de circuit intermédiaire et différentes fréquences de fonctionnement de l'EVG (1) pouvant être réglées au moyen du circuit à fréquence de fonctionnement,
le circuit de tension de circuit intermédiaire (7, 8, 9, 11, 32) présentant des combinaisons de résistances commutables au moyen d'un élément de commutation d'éclairage de secours (32) du dispositif de commutation électronique (6) pour, en cas d'éclairage de secours, réduire la tension de circuit intermédiaire et permettre une réduction de la puissance de lampe,
et le circuit à fréquence de fonctionnement (10, 12, 33) présentant des combinaisons de résistances commutables au moyen d'un élément de commutation (33) du dispositif de commutation électronique (6) pour, en cas d'éclairage de secours, augmenter une fréquence du ballast électronique (1) et permettre une réduction supplémentaire de la puissance de lampe.

2. Ballast électronique selon la revendication 1, dans lequel l'élément de commutation de réseau électronique (31) est connecté en série entre le redresseur de secteur (5) et le convertisseur résonant (3) et est conçu comme un transistor, de préférence un transistor à effet de champ.

3. Ballast électronique selon l'une quelconque des revendications précédentes, dans lequel le redresseur de secteur (5) est un pont redresseur et est connecté au convertisseur résonant (3) à travers un dispositif de filtre réseau (22, 23, 29) de l'EVG (1).

4. Ballast électronique selon la revendication 3, dans lequel le dispositif de filtre réseau (22, 23, 29) présente au moins une diode (22) et un restricteur de suralimentation (23).

5. Ballast électronique selon l'une quelconque des revendications précédentes, dans lequel une première combinaison de résistances du circuit de tension de circuit intermédiaire forme un diviseur de tension (8, 9) lors de l'alimentation de tension secteur (4) et détermine une tension de circuit intermédiaire appliquée à un condensateur de charge (14) du convertisseur résonant (3).

6. Ballast électronique selon la revendication 5, dans lequel la première combinaison de résistances présente au moins deux résistances (8, 9).

7. Ballast électronique selon l'une quelconque des revendications précédentes, dans lequel une résistance de réglage de fréquence (10) est connectée, comme partie du circuit à fréquence de fonctionnement, en série d'un composant de commande (13) de l'EVG (1) vers la masse du convertisseur résonant (3).

8. Ballast électronique selon l'une quelconque des revendications précédentes, dans lequel l'EVG (1) présente un redresseur de tension de secours (25) pour l'alimentation de la tension de secours.

9. Ballast électronique selon la revendication 8, dans lequel la tension de secours peut être fournie au convertisseur résonant (3) à travers le redresseur de tension de secours (25) et un dispositif à diodes (24) de l'EVG (1).

10. Ballast électronique selon la revendication 6, dans lequel le circuit de tension de circuit intermédiaire présente au moins un montage en parallèle de l'élément de commutation de secours (32) électronique et d'une résistance de secours (11) et, en cas d'urgence, l'élément de commutation de secours (32) électronique peut être désactivé et la résistance de secours (11) forme conjointement avec la première combinaison de résistances (8, 9) une deuxième combinaison de résistances pour la détermination d'une deuxième tension de circuit intermédiaire, l'élément de commutation de secours (32), la résistance de secours (11) et la première combinaison de résistances (8, 9) formant le circuit de tension de circuit intermédiaire.

11. Ballast électronique selon la revendication 7, dans lequel l'EVG (1) présente un montage en série d'au moins l'élément de commutation électronique (33) et d'une résistance (12) en parallèle à la résistance de réglage de fréquence (10), l'élément de commutation (33), la résistance (12) et la résistance de réglage de fréquence (10) formant en tant qu'autre combinaison de résistances commutable le circuit à fréquence de fonctionnement.

12. Ballast électronique selon la revendication 7, dans lequel le convertisseur résonant (3) présente, outre le composant de commande (13) de l'EVG (1) et le condensateur de charge (14) de l'EVG (1), au moins deux transistors (15, 16) et un circuit résonant série (19, 20, 21).

13. Ballast électronique selon la revendication 12, dans lequel le composant de commande (13) présente des dispositifs de protection pour coupure en cas de surtension/sous tension et/ou pour coupure de Fin de vie.

14. Ballast électronique selon la revendication 10 ou 11, dans lequel la résistance de secours (11) et/ou la résistance (12) sont formées à partir d'une ou plusieurs résistances.

15. Procédé de commande d'au moins une lampe (2), telle qu'une DEL une lampe fluorescente, une lampe à décharge de gaz ou similaire, au moyen d'un ballast électronique (1) comprenant :
le redressement, par un redresseur de secteur (5) de l'EVG (1), d'une alimentation de tension secteur (4), laquelle fournit une alimentation réseau,
la génération, par un convertisseur résonant (3) de l'EVG (1), d'une tension de démarrage et/ou de fonctionnement à partir de l'alimentation de tension secteur (4) redressée par le redresseur de secteur (5),
**caractérisé par** :
la coupure de la tension secteur de l'alimentation de tension secteur (4) et l'activation d'une tension de secours en tant que tension de circuit intermédiaire dans l'EVG (1) à travers un élément de commutation de réseau (31) électronique d'un dispositif de commutation électronique (6) de l'EVG (1) en cas d'éclairage de secours en cas de tension secteur trop faible,
le réglage, par un circuit de tension de circuit intermédiaire (7, 8, 9, 11, 32 ) de l'EVG (1), lequel présente des combinaisons de résistances commutables au moyen d'un élément de commutation d'éclairage de secours (32) du dispositif de commutation électronique (6), de différentes tensions de circuit intermédiaire pour, en cas d'éclairage de secours, réduire la tension de circuit intermédiaire et permettre une réduction de la puissance de lampe,
le réglage, par un circuit à fréquence de fonctionnement (10, 12, 33 ) de l'EVG (1), lequel présente des combinaisons de résistances commutables au moyen d'un élément de commutation (33) du dispositif de commutation électronique (6), de différentes fréquences de fonctionnement de l'EVG (1) pour, en cas d'éclairage de secours, augmenter une fréquence du ballast électronique (1) et permettre une réduction supplémentaire de la puissance de lampe.
